Europäisches Patentamt

European Patent Office

Office européen des brevets

(11) Publication number: **0 081 883**
**A2**

## (12) EUROPEAN PATENT APPLICATION

(21) Application number: **82201571.5**

(22) Date of filing: **09.12.82**

(51) Int. Cl.³: **B 29 C 17/07**

(30) Priority: **14.12.81 NL 8105619**

(43) Date of publication of application: **22.06.83**
**Bulletin 83/25**

(84) Designated Contracting States: **AT BE CH DE FR GB IT LI LU NL SE**

(71) Applicant: WAVIN B.V., Händellaan 251, NL-8031 EM Zwolle (NL)

(72) Inventor: **Cancrinus, Hendrik, Entingheweg 21, NL-7991 CC Dwingeloo (NL)**
Inventor: **Olderaan, Wilhelmus F. T. C., Lijsterbeslaan 16, NL-7771 DN Hardenberg (NL)**
Inventor: *de Putter, Warner Jan, Jan van Arkelstraat 11,* **NL-7772 AN Hardenberg (NL)**

(74) Representative: **van der Veken, Johannes Adriaan, Ir. et al, EXTERPATENT 3 & 4 Willem Witsenplein, NL-2596 BK The Hague (NL)**

(54) **A method and apparatus for moulding a socket to a plastic tube.**

(57)    A socket 3 is moulded to a thermoplastic tube 7 by heating a portion 14 of a plastic tube 7 to the deformation temperature and after having placed this portion 14 in a mould 1, said portion is subjected to a gaseous wave of about 30 atm. which strikes said portion in less than 0,2 seconds against the mould wall of a mould space 2 corresponding with the shape of the socket 3. The still hot socket 3 is cooled without any support under ambient conditions.

An apparatus for forming said socket comprises a mould 1 with a mould space 2 and a compressor 16 for obtaining said gaseous wave.

A method and apparatus for moulding a socket to a
plastic tube.

Background of the invention

The invention relates to a method of moulding
a socket to a plastic tube by placing a portion of
a plastic tube opposite a mould wall and by bringing
said portion of the plastic tube in contact with
the mould wall by means of a fluid pressure.

The expression socket comprises, more generally,
any widening of a plastic tube.

Such a method of moulding socket ends to plastic
tubes is generally known. For that purpose an end
portion of a thermoplastic tube to be deformed is
heated to above the deformation themperature, e.g.
to110° for polyvinylchloride whereupon a partition
sealing the inner cross section of the plastic tube
is provided at distance  from the free end of the
portion of the plastic tube to be deformed and subsequently the heated end portion of the plastic tube
is deformed to a socket by the introduction of a gas
or liquid under pressure. Said internal fluid pressure
for moulding a socket is obtained by gradually increasing the pressure.

Said known method presents the disadvantage that
the time required for the deformation of a plastic
tube portion brought into a deformable state is rela-

-2-

tively long so that the manufacture of finished products is considerably reduced and mostly lies below the desired value in the case of moulding sockets to plastic tubes. Additionally the obtained sockets are inhomogeneous which implies that a large wall thickness has to be used to obtain a socket having the desired strength properties.

Summary of the invention

The present invention aims to provide a method in which the desired deformation of a portion of a plastic tube for moulding a socket can almost instantaneously be obtained in that a fluid pressure wave acting upon the portion of the plastic tube to be deformed substantially instantaneously strikes the portion to be deformed against the mould wall.

The use of such a fluid pressure wave results in a rapid formation of a socket end to a plastic tube. The socket obtained furthermore possesses very homogeneous properties and a shrinking behaviour differing from sockets formed in a known manner by deformation of a portion of a plastic tube.

The term "instantaneously" is to be understood here as a time of less than 0,5 sec, preferably less than 0,2 sec. More particularly an instantaneous period of time amounts to less than 0,1 sec and more preferably less than 0,02 sec.

It is recommended to heat the portion to be deformed to the usual deformation temperature for the relative plastic.

-3-

In a preferred embodiment of the present invention the fluid pressure wave acts upon an open cylindrical tubular portion to be deformed in such a manner that an end part of the portion to be deformed, in conjunction with the mould wall, seals off an opening or all the openings in the mould wall at the time of the action of a fluid pressure wave. Due to this measure the opening or openings in the mould wall connecting the inner side of the mould to the outside, will immediately be sealed off, so that the fluid of the pressure wave is not able to escape from the mould. A mould wall being connected to the outside through one or more openings offers the great advantage that no air layer can be formed upon the inner side of the mould wall at the end of the deformation step, as this would prevent the portion to be deformed to strike completely against the mould wall at the action of the fluid pressure wave.

An advantageous measure according to the invention is characterized in that the deformed end portion of the plastic tube is removed from the mould wall immediately after said deformation and is subsequently cooled. It has been found that sockets moulded to plastic tubes in this manner, can be removed from the mould wall while still being hot and cooled in an unsupported way under ambient conditions without any inconvenient shrinking phenomena occurring, which implies that the production cycle can be decreased to a considerable extent.

The method according to the invention is effectively characterized in that the portion of the plastic tube to be deformed is heated to a temperature

-4-

over the glass transition temperature of the respective plastic.

When using a thermoplastic, particularly a polyolefin, more particularly a polypropylene, the portion to be deformed is heated to a temperature of over 135$^{\circ}$C.

Preferably a fluid pressure wave is used derived from a fluid having a pressure of at least 10 atm., more preferably a pressure of over 25 atm., the fluid preferably being a gaseous fluid.

The invention is also embodied in an apparatus for moulding a socket to a plastic tube in accordance with the method according to the invention and comprising a mould with a mould space for moulding a socket to a plastic tube and means for creating a fluid pressure in a region opposite the wall of the mould space, being characterized in that the apparatus is provided with means for having a fluid pressure wave act upon a portion of a plastic tube to be deformed said pressure wave substantially instantaneously striking the portion to be deformed against the mould wall.

Finally the invention relates to a plastic tube provided with a socket obtained by deforming at least a portion of a plastic tube and pressing same against a mould wall by the action of a fluid pressure, being characterized in that the deformation has been effected by a fluid pressure wave so acting upon a portion of a plastic tube to be deformed that said portion will substantially instantaneously be

-5-

struck against a mould wall.

Sockets of plastic tubes moulded in this way are clearly differing from sockets of plastic tubes hitherto known, as the portions deformed to sockets possess a greater homogeneity and a different shrinking behaviour in comparison with known sockets of plastic tubes made in another way.

Description of the drawings:

Fig. 1 is a section of a mould surrounding a portion of a plastic tube and a non-deformed portion of a plastic tube;

Fig. 2 illustrates the same situation as in fig. 1 but with a deformed portion of a plastic tube;

Fig. 3 illustrates the same situation as in fig. 2 but with a profiled mould wall; and

Fig. 4 shows a tube comprising a plurality of successive widenings, the tube being cut in the middle of said widenings for obtaining a tube with a socket.

Description of the preferred embodiments.

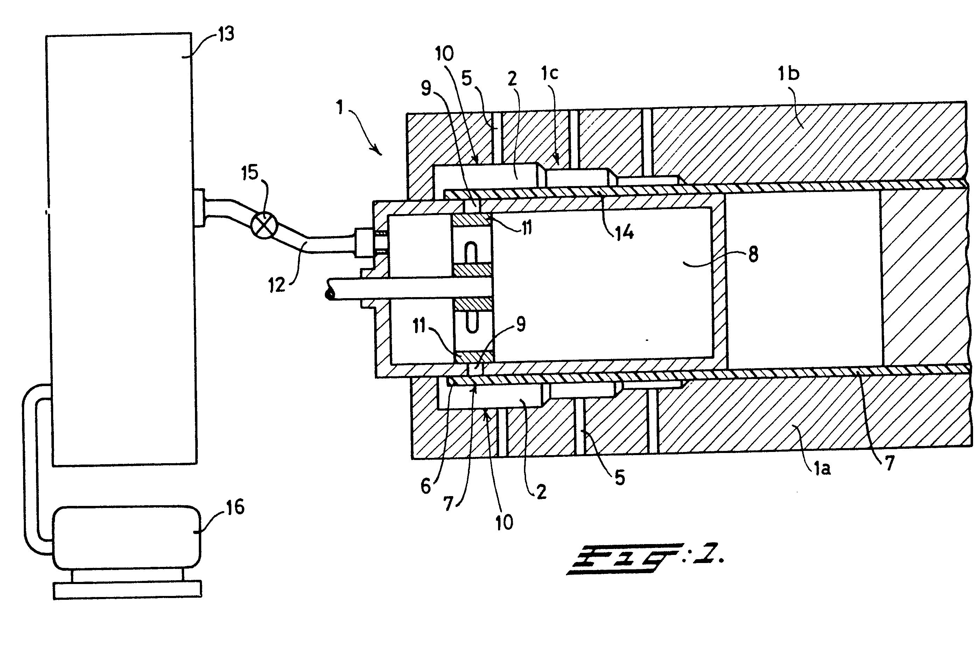

Fig. 1 shows a mould 1 comprising mould parts 1a and 1b which bound a mould wall 1c. The mould wall 1c forms a mould space 2 comprising a mould space wall 10 for forming a socket 3 at the end of a plastic tube 7.

To prevent the presence of an air layer upon the outer side of a plastic tube 7, which air layer would prevent the desired deformation, the mould parts

-6-

comprise annular openings 5 ensuring a free connection between the inner side of the mould wall and the outside.

A chamber 8 is provided near the free end 6 of the end portion 14 of the plastic tube 7 to be deformed to a socket. In an open position of a closing member 11 chamber 8 may extend into the mould space 2 through an opening 9.

By means of a compressor 16 chamber 8 can be fed with pressurized air derived from a pressurized air storage container 13, through a conduit 12. The pressure in the said pressurized air storage container 13 amounts to at least 10 atm. and preferably to 25 to 35 atm. overpressure. In the present case a presure of 30 atm. overpressure is used in chamber 8.

This implies that when closing member 11 is opened the same pressure is also instantaneously exercised upon end portion 14 of the plastic tube 7, so that this end portion 14 is deformed and a socket 3 is formed in a period of 0,02 sec. The pressurized air escaping from chamber 8 subsequently flows in the direction of the arrow, to the other end 14a of the end portion 14 of the plastic tube 7 to be deformed so that the desired socket is provided. After said deformation the pressure in the mould space still amounts to 22 atm. Prior to the deformation and in case of the use of polypropylene, the portion to be deformed is heated to approximately 140°C. The deformation temperature for polyvinylchloride is generally comprised between 110 and 140°C.

-7-

The deformation temperature for soft polyethylene is generally comprised between 105 and 110°C.

For hard polyethylene deformation temperatures comprised between 130 to 135°C are maintained, at which temperatures the plastics will be in the rubber-elastic state.

The deformation temperature for polymethyl methaacrylate is comprised between 140 and 170°C.

The chamber 8 may be closed off from the pressurized air storage container 13 by means of a closing valve 15.

To deform a polypropylene tube having a diameter of 50 mm the chamber 8 has a volume comprised between 200 to 500 cm³, but it will be obvious that the scope of the invention is not restricted to the use of such a chamber.

Advantageously the plastic product consists of a polyolefin, more particularly polyethylene or polypropylene.

EXAMPLE I

A polypropylene tube having a diameter of 50 mm. and a wall thickness of 2 mm is heated to 140°C and placed in the apparatus as illustrated in fig. 1. The chamber 8 having a contents of 250 cm³ is filled with pressurized air having an ambient temperature (of approximately 21°C) and a pressure of 30 atm. overpressure at a closed position of the closing member 11.

-8-

Hereupon the valve 15 supplying pressurized air from container 13 to chamber 8, is closed and closing member 11 is rapidly opened.

In less than 0,1 sec, generally in less than 0,02 sec. the desired socket end is formed, whereupon the plastic tube comprising the socket 3 is immediately removed from the mould wall. During cooling in the open air without any further supporting means, the formed socket will not shrink.

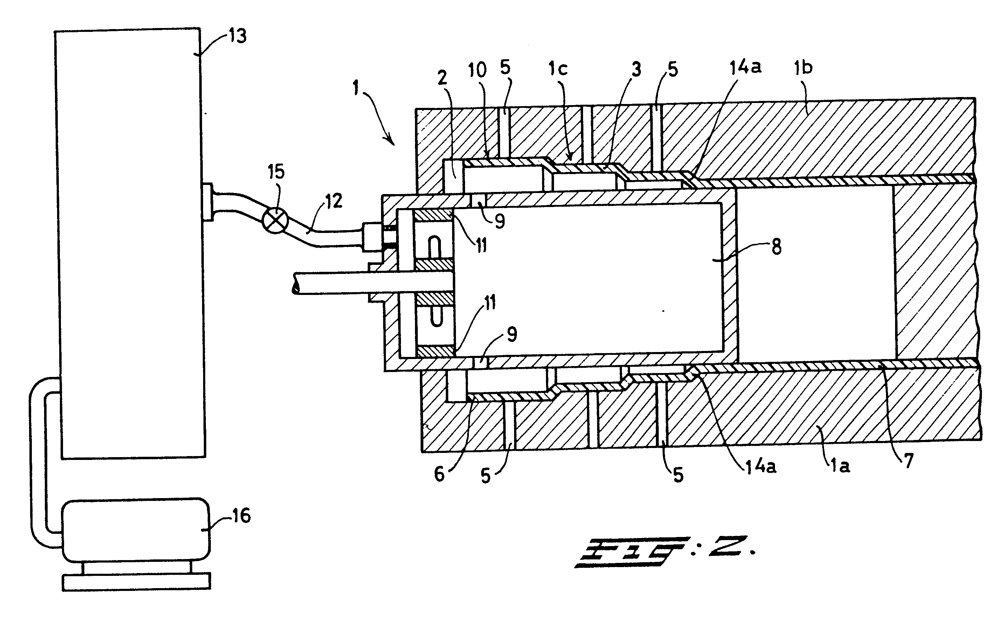

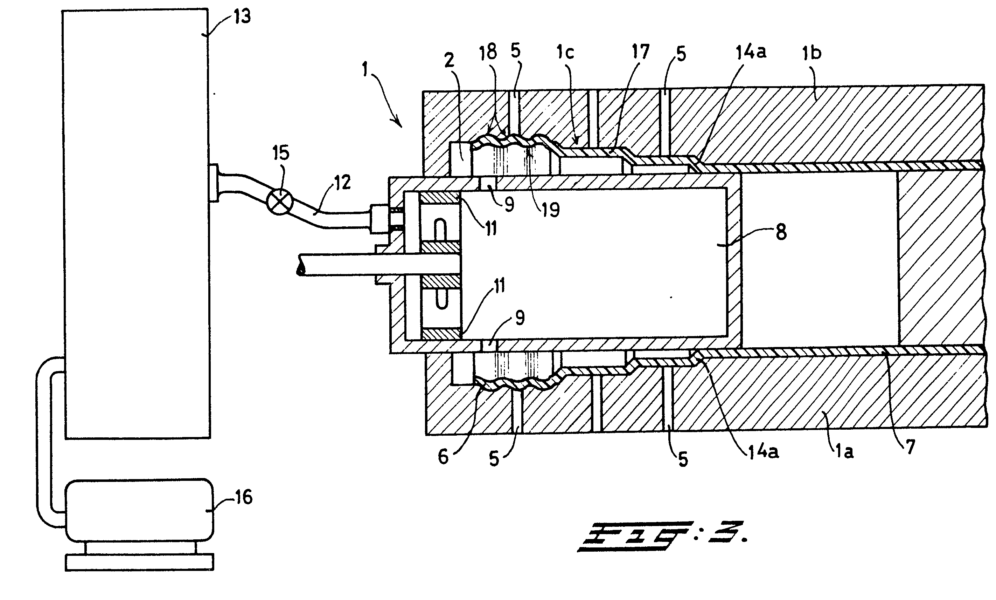

Fig. 3 shows the same situation as in fig. 2, but now the mould space wall 10 is provided with corrugations comprising wave crests and wave valleys therebetween. The action of the pressurized air will now strike the wall of the tube 7 against this corrugated mould wall 10 and thus a first widening or socket 6 will be provided with corrugations comprising wave crests 18 and wave valleys 19.

These corrugations are used for snappingly engaging a retaining ring which retains a head portion of a sealing sleeve in said corrugated socket or first widening 6. For accommodating the sealing sleeve the socket comprises a second widening 17.

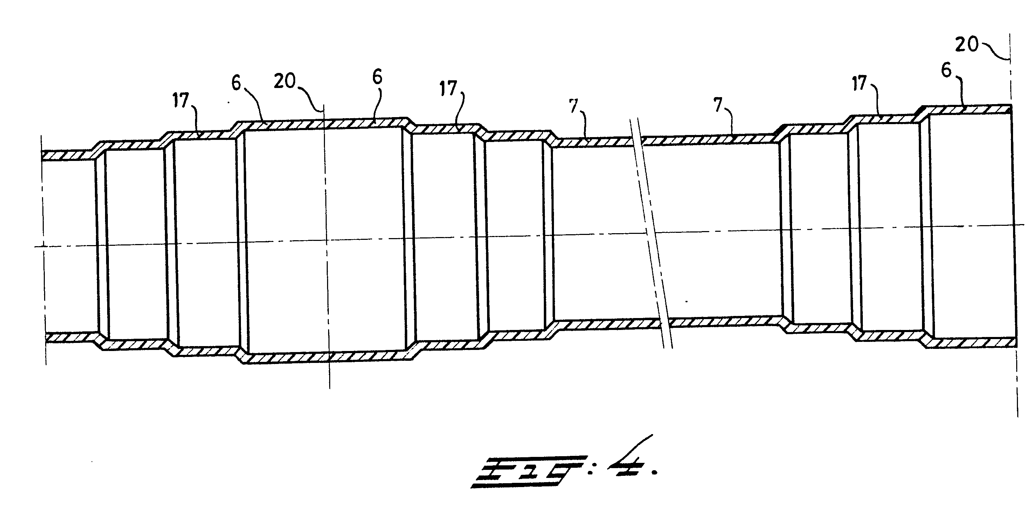

At last fig. 4 shows a tube provided with a plurality of successive widenings. Each widening comprises a first widening or socket 6, a second widening 17 at both sides of said first widening 6 and a third widening joins the tube.

This tube is obtained by extruding a tube and

-9-

subjecting said tube at regular intervals with said widenings. This requires a mould moving with  the extruded tube during the period of engagement of the tube 7 and the mould 1; after having formed a widening as shown in fig. 4 the mould will be separated from the widening and will be returned to its original position. Moulds of this type are well known in the art.

A tube 7 with a socket will be obtained by cutting a widening along line 20 so that a tube 7 is obtained which comprises a first widening 6, a second wide ing 17 and a third widening joining said second widening 17 and tube 7.

0081883

-1-

WHAT IS CLAIMED IS:

1. A method of moulding a socket to a plastic tube by placing a portion of a plastic tube (7) opposite a mould wall and bringing said portion of a plastic tube in contact with the mould wall (10) by means of a fluid pressure, characterized in that a fluid pressure wave acting upon the portion (14) of the plastic tube to be deformed substantially instantaneously strikes the portion to be deformed against the mould wall (10).

2. A method according to claim 1, characterized in that a fluid pressure wave strikes the portion to be deformed against the mould wall in less than 0,2 sec., more preferably in less than 0,02 sec.

3. Method according to claim 2, characterized in that the portion to be deformed is heated to at least 50°C, more preferably to over approximately 75°C and in case of polypropylene, to over 135°C.

4. Method according to claim 2, characterized in that the portion to be deformed is heated to at least the glass transition temperature, preferably to the deformation temperature of the respective plastic.

5. Method according to claim 1, characterized in that a preferably gaseous fluid pressure wave is used, derived from a fluid having a pressure of at least 10 atm., more preferably a pressure of over 25 atm., while the inner side of the mould wall is in open connection with the outside by means of one or more openings.

6. Method according to claim 5, characterized in that the fluid pressure wave acts upon said portion (6) to be deformed in such a manner than an end portion (6) to be deformed, in conjunction with the

-2-

mould wall, seals an opening or all the openings at the action of a fluid pressure wave.

7. A method according to claim 6, characterized in that the deformed portion is removed from the mould wall immediately after its deformation and cooled in a free position.

8. Method according to claim 1, characterized in that the plastic is a thermoplastic, particularly a polyolefin.

9. A method according to claims 1 to 8, characterized in that the mould wall is corrugated and thus the socket (6) is provided with corrugations.

10. A method according to claims 1-9, characterized in that a tube (7) is provided with a plurality of widenings and thereafter said widening is cut along a separation line (20).

11. Apparatus for moulding a socket to a plastic tube by means of a method according to claim 1, comprising an optionally movable mould (1) with a mould space (2) for moulding a socket (3) to a plastic tube (7) and means (16) for creating a fluid pressure in a region opposite the wall of the mould space (2), characterized in that the apparatus is provided with means (13, 16) for having a fluid pressure wave act upon a portion of a plastic tube to be deformed, said pressure wave substantially instantaneously striking the portion (14) to be deformed against the mould wall (1c).

12. Plastic tube, preferably a thermoplastic tube, provided with a socket obtained by deforming at least a portion of a plastic tube and pressing same against a mould wall by the action of a fluid pressure characterized in that the deformation has been effected by a fluid pressure wave so acting

-3-

upon a portion of the plastic tube to be deformed that said portion will substantially instantaneously be struck against a mould wall.

Fig:1.

1/4

0081883

Fig.2.

0081883

Fig.3.

Fig. 4